# FASCICULE DE BREVET EUROPEEN

(11) **EP 3 574 752 B1**
(45) Date de publication et mention de la délivrance du brevet: **09.02.2022**
(21) Numéro de dépôt: 19173447.4
(22) Date de dépôt: 09.05.2019
(51) Int. Cl.: A01K 31/00, E06B 9/17

(54) **ENSEMBLE AVEC NICHOIR POUR LA RÉNOVATION D'UNE FENÊTRE**
EINHEIT MIT EINEM NISTKASTEN FÜR DIE RENOVIERUNG EINES FENSTERS
ASSEMBLY WITH NESTING BOX FOR RENOVATING A WINDOW

(30) Priorité: 01.06.2018 FR 1854753
(43) Date de publication de la demande: 04.12.2019
(73) Titulaire: AFL Foessel, 45200 Amilly (FR)
(72) Inventeur: POISSON, Olivier, 45230 MONTBOUY (FR)
(74) Mandataire: Gicquel, Frédéric

(56) Documents cités:
- EP-A1- 2 745 688
- DE-A1-102009 056 170
- DE-U1-202012 009 958

## Description

Le domaine de l'invention est celui de la conception, de la fabrication et de la pose de menuiseries.

Plus précisément, l'invention concerne un ensemble pour la rénovation d'une fenêtre, l'ensemble étant complémentaire de la réalisation d'une isolation thermique par l'extérieur.

Pour la construction ou pour la rénovation d'un bâtiment, l'isolation thermique et les menuiseries constituent des postes de travaux importants.

Ces deux postes de travaux sont complémentaires, et la réalisation de l'un peut influer sur la réalisation de l'autre.

Par exemple, l'isolation thermique du bâtiment peut être réalisée par l'extérieur. Cette technique d'isolation vise à installer l'isolation sur la face extérieure de la maçonnerie (les murs) du bâtiment. Elle présente de nombreux avantages dont notamment la capacité à régler au moins partiellement le problème des ponts thermiques de la maçonnerie ainsi qu'à augmenter l'inertie thermique du bâtiment.

Une telle technique d'isolation nécessite d'adapter les menuiseries installées sur le bâtiment, et notamment de prévoir des cadres de fenêtres présentant une conception adaptée à la présence d'une couche d'isolant sur la face extérieure des murs du bâtiment. De tels cadres de fenêtre présentent dans leur profondeur une première partie en contact avec la maçonnerie ainsi qu'une seconde partie en contact avec l'isolant, la seconde partie étant destinée à être positionnée vers l'extérieur du bâtiment par rapport à la première partie.

Pour l'installation ou la rénovation d'une fenêtre, en même temps que la réalisation d'une isolation thermique par l'extérieur, il est avantageux d'utiliser un pré-cadre.

Un pré-cadre correspond à un cadre de fenêtre préassemblé. Il permet, entre-autres, de réaliser plus rapidement la pose d'une fenêtre.

Lors de la rénovation d'un bâtiment, la pose de plusieurs fenêtres en utilisant des pré-cadres offre un gain de temps non négligeable pour l'entreprise réalisant l'intervention. Du document DE 10 2009 056170 A1 un ensemble pour l'installation et/ ou la rénovation d'une fenêtre est connu, comprenant un coffre de volet roulant intégré dans un bâtiment de telle façon que les ponts thermiques sont inexistants ou minimisés.

Cela étant, il est fréquemment constaté au moment de la rénovation que les coffres de volet roulant en particulier sont utilisées par des oiseaux pour nidifier.

En effet, des oiseaux tels que les martinets créent leurs nids dans des anfractuosités situées en hauteur. Sur les bâtiments, ces oiseaux utilisent des recoins de maçonnerie et de toitures pour la réalisation de leurs nids, et également les espaces creux situés en haut des fenêtres

Par exemple, il est couramment observé par les poseurs de fenêtres que les martinets créent leurs nids dans les coins supérieurs des fenêtres, voire tel qu'expliqué précédemment à l'intérieur des coffres extérieurs de volets roulants quand les fenêtres en sont pourvues.

Cette utilisation des fenêtres par les oiseaux se révèle problématique.

En effet, il peut déjà être remarqué que la présence de nids en haut des fenêtres amène les oiseaux à provoquer des salissures sur les rebords de ces fenêtres. Les oiseaux ont en effet pour habitude de ressortir partiellement du nid pour faire leurs déjections.

De plus, suite à la colonisation des coffres de volets roulants, les mécanismes de ces volets peuvent être impactés et ne plus fonctionner correctement. Des salissures peuvent également être produites dans cette situation.

De manière plus complexe pour les professionnels des fenêtres, les nids des espèces d'oiseaux protégées ne peuvent pas être librement retirés. Il est important de préserver l'habitat de ces espèces protégées pour que leurs populations puissent se reconstituer. Il est à noter que selon les législations nationales, des amendes pouvant monter à plusieurs milliers d'euros ainsi que des procès au pénal peuvent être infligées aux personnes qui détruiraient les nids d'espèces d'oiseaux protégées.

En conséquence, il est essentiel, pour des professionnels ayant pour mission de rénover des fenêtres d'un bâtiment, de prendre en compte les conditions d'intervention prescrites par les lois dans le cas où le bâtiment présente des nids d'oiseaux protégés.

Dans une situation courante, ces conditions d'intervention consistent principalement en des mesures de sauvegarde du lieu de nidification des espèces d'oiseaux protégées.

Il peut donc en résulter une impasse tant pour les donneurs d'ordre que pour les professionnels de la rénovation de menuiseries, puisque les uns attendent la réalisation des travaux tandis que les autres sont dans l'interdiction de réaliser les travaux commandés.

L'invention a notamment pour objectif de résoudre cette problématique de l'art antérieur.

Plus précisément, l'invention a pour objectif de fournir une solution visant à concilier l'installation et/ou la rénovation une fenêtre, la réalisation d'une isolation thermique par l'extérieur, et le respect des prescriptions relatives à la sauvegarde des espèces d'oiseaux protégées.

L'invention a également pour objectif de proposer une telle solution qui soit rapide et aisée à mettre en œuvre.

L'invention a encore pour objectif de proposer une telle solution qui permette d'éviter ou à tout le moins de limiter les désagréments relatifs aux nids d'oiseaux situés au niveau des fenêtres d'un bâtiment.

Ces objectifs, ainsi que d'autres qui apparaîtront par la suite, sont atteints grâce à l'invention qui a pour objet un ensemble pour l'installation et/ou la rénovation d'une fenêtre complémentaire d'une isolation thermique par l'extérieur de la façade d'un bâtiment, l'ensemble comprenant un pré-cadre destiné à porter une fenêtre, caractérisé en ce qu'il comprend :
- un coffre destiné à surplomber le pré-cadre, le coffre présentant au moins une cavité munie d'au moins une ouverture destinée à communiquer avec l'extérieur du bâtiment;
- des moyens de fixation du coffre au bâtiment, conçu pour ménager un écartement entre le coffre et le bâtiment ;
- une première couche d'isolant thermique entre le coffre et le bâtiment ;
- une deuxième couche d'isolant thermique entre le coffre et le pré-cadre ;
et le coffre présente une corniche incluant une paroi inférieure dans laquelle la ou les ouvertures sont ménagées, la corniche faisant saillie par rapport au reste du coffre,
la cavité formant un nichoir à oiseaux.

L'ensemble selon l'invention permet d'installer ou de rénover une fenêtre tout en conservant les bénéfices de l'isolation thermique par l'extérieur des murs du bâtiment, ainsi qu'en permettant de préserver un lieu de nidification pour des oiseaux.

Plus précisément, en intégrant un coffre avec une cavité formant un nichoir à oiseaux, l'ensemble selon l'invention propose une solution intégrant directement un lieu de nidification adapté aux oiseaux.

Cette intégration permet de proposer un visuel harmonieux de la menuiserie sur la façade du bâtiment tout en évitant de potentielles nidifications non désirées sur des éléments de la menuiserie qui ne seraient pas adaptées, tel qu'un coffre de volet roulant.

L'ensemble selon l'invention forme également une solution particulièrement intéressante pour des personnes amenées à poser l'ensemble. En effet, le coffre, séparé du pré-cadre, doit simplement être installé de manière à surplomber ledit pré-cadre. Ce coffre qui est destiné à surplomber le pré-cadre et à présenter une cavité pour former le nichoir à oiseau complémente l'ensemble tout en respectant l'isolation thermique du bâtiment.

Cette solution, dans le cadre d'une rénovation, permet notamment de rénover des fenêtres anciennes dont les parties supérieures serviraient ou auraient servies de lieu de nidification d'espèces protégées.

Dans les faits, de telles fenêtres sont colonisées tous les ans par des oiseaux protégés, tels que des martinets, et il est connu que des nids habités peuvent être retrouvés tous les ans sur ces fenêtres.

Dans cette situation, une opération de rénovation de la fenêtre peut être avalisée par des services d'urbanisme grâce à l'utilisation de l'ensemble selon l'invention.

En effet, les autorités compétentes seraient à même d'autoriser le chantier de rénovation mettant en œuvre l'ensemble selon l"invention du fait qu'il permet de recréer des nids dans le même espace que celui antérieurement utilisé par les oiseaux pour nidifier.

Ces oiseaux, revenant d'année en année aux mêmes endroits pour nidifier, peuvent alors trouver des nichoirs parfaitement adaptés à la réalisation de leurs nids.

La corniche du coffre permet de positionner la ou les ouvertures dans une configuration particulièrement accessible pour les oiseaux. La position de ces ouvertures permet également de limiter, voire d'empêcher, l'entrée d'eau dans le coffre lors d'intempéries, ainsi que les nuisibles et prédateurs (chat, pie, geai...).

Préférentiellement, les moyens de fixation sont au moins partiellement réalisés à partir d'un matériau thermiquement non conducteur.

De cette manière, les moyens de fixation du coffre au bâtiment ménagent un écartement entre le coffre et le bâtiment sans créer de pont-thermique.

Selon un mode de réalisation préférentiel de l'ensemble :
- le coffre présente une profondeur Pc ;
- la première couche d'isolant thermique présente une épaisseur E1 ;
- l'isolation thermique par l'extérieur de la façade du bâtiment est d'une épaisseur total Eit,
et (Pc + E1) est sensiblement égal à Eit.

De cette manière, le coffre s'intègre complètement ou quasiment complètement dans l'épaisseur de l'isolant et ne fait pas ou peu saillie par rapport à la façade du bâtiment.

Par l'expression « sensiblement égal », il est entendu qu'une situation dans laquelle le coffre fait légèrement saillie par rapport à la façade du bâtiment, pour des raisons pratiques de réalisation, est également concernée.

Selon une solution préférée, l'ensemble comprend un habillage extérieur du coffre, l'habillage extérieur présentant une extrémité basse s'étendant jusqu'au pré-cadre, en recouvrement de la deuxième couche d'isolant thermique.

Le coffre s'intègre alors visuellement dans la continuité de la partie extérieure du pré-cadre, et ainsi de la nouvelle fenêtre installée dans le pré-cadre.

Avantageusement, le pré-cadre présente une largeur totale L1 sensiblement égale à une largeur totale L2 de l'habillage extérieur du coffre.

En présentant une largeur sensiblement égale, le coffre s'apparente d'autant plus à un élément de menuiserie de la fenêtre positionnée en dessous.

Préférentiellement, l'habillage extérieur comprend au moins un élément inférieur s'étendant en dessous de la corniche, les ou les éléments inférieurs délimitant avec la paroi inférieure de la corniche au moins un espace de passage des oiseaux jusqu'à la ou les ouvertures.

Un tel espace de passage tend à reproduire la trajectoire que les oiseaux réalisent pour entrer dans les recoins de menuiserie et en sortir.

Selon un mode de réalisation préférentiel, l'élément inférieur forme une pente au moins en dessous des ouvertures, la ou les pentes étant orientées vers l'extérieur du bâtiment.

L'élément inférieur permet ainsi de chasser vers l'extérieur du coffre et de la façade des particules ou fluides s'écoulant depuis la ou les ouvertures.

Par exemple, dans le cas où des oiseaux se positionneraient au niveau de l'ouverture pour faire leurs déjections, alors ces dernières seraient amenées à s'écouler en direction de l'extérieur du bâtiment.

Selon une caractéristique avantageuse, l'élément inférieur présente à son extrémité basse un rebord en saillie par rapport à la façade du bâtiment, le rebord en saillie étant destiné à éviter tout ruissellement sur la fenêtre depuis l'élément inférieur.

Le rebord en saillie fait alors office de goutte d'eau. Tout liquide s'écoulant sur l'élément inférieur est alors dirigé vers le rebord en saillie qui éloigne le liquide de la façade du bâtiment pour qu'il ne ruisselle pas dessus.

Avantageusement, l'ensemble comprend au moins deux cavités réparties côte à côte dans le coffre, les cavités étant séparées les unes des autres par des cloisons présentant des trous d'aération.

Les différentes cavités séparées par les cloisons peuvent être alors partiellement ventilée. Les trous d'aération permettent dans certaines conditions de diminuer la température à l'intérieur de chaque cavité grâce à la création de courants d'air.

Les trous d'aération sont avantageusement situés en partie haute des cavités pour permettre la création de courants d'air en partie haute des cavités (zone la plus chaude de ces cavités).

Selon un mode de réalisation préféré de l'ensemble, l'ouverture de chaque cavité est décalée d'un côté ou de l'autre de ladite cavité.

L'ouverture décalée permet de gagner de la place dans la cavité munie de ladite ouverture.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'une façade équipée de l'ensemble selon l'invention ;
- la figure 2 est une vue en coupe du coffre de l'ensemble selon l'invention, positionné dans une façade au-dessus d'un pré-cadre ;
- les figures 3a et 3b sont des vues en perspective d'un coffre de l'ensemble selon l'invention, respectivement selon une représentation assemblée et une représentation éclatée ;
- la figure 4 est une vue en transparence du coffre selon l'invention ;
- la figure 5 est une illustration du coffre utilisés par des oiseaux.

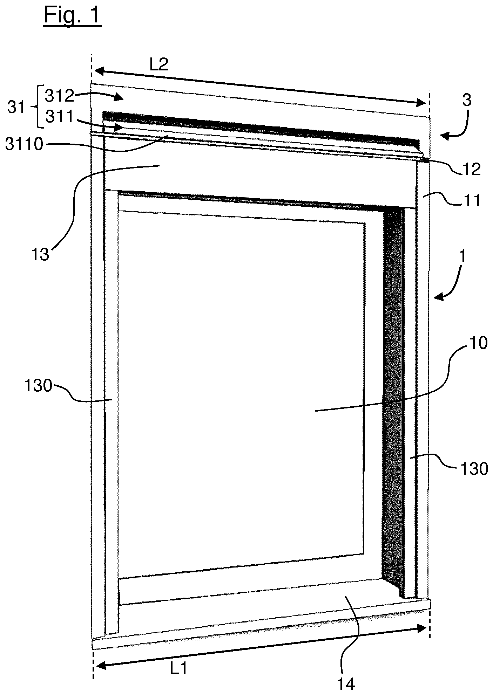

En référence à la figure 1, l'ensemble selon l'invention permet d'installer et/ou de rénover une fenêtre.

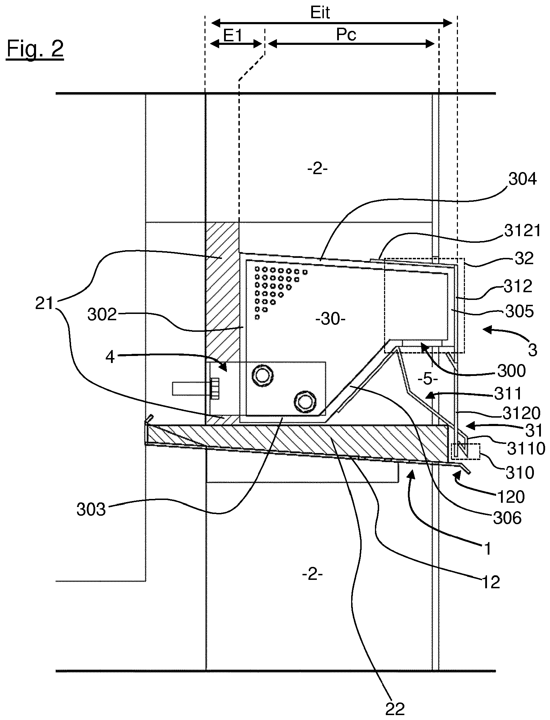

Tel qu'illustré par la figure 2, cet ensemble est complémentaire d'un isolation thermique 2 par l'extérieur de la façade d'un bâtiment (par exemple une façade béton d'un bâtiment).

En référence aux figures 1 et 2, l'ensemble selon l'invention comprend un pré-cadre 1 qui est destiné à porter une fenêtre 10.

Ce pré-cadre 1 correspond à un cadre de fenêtre 10 préassemblé.

Selon le présent mode de réalisation illustré par la figure 1, l'ensemble comprend également un volet roulant installé dans un caisson 13, et des coulisses 130 destinées à guider le volet roulant.

Le pré-cadre 1 comprend :
- une partie haute 12 ;
- une partie basse 14 ;
- deux montants latéraux 11 ou « retours du pré-cadre1 ».

Les deux montants latéraux 11 forment des éléments d'habillage destinés à être visibles sur la façade du bâtiment.

Le caisson 13 du volet roulant est situé directement en dessous de la partie haute 12 du pré-cadre 1.

En référence aux figures 1 et 2, cette partie haute 12 prend essentiellement la forme d'une plaque.

Selon le principe de l'invention, l'ensemble comprend :
- un coffre 3 destiné à surplomber le pré-cadre 1 ;
- des moyens de fixation 4 du coffre 3 au bâtiment.

Tel qu'illustré par les figures 2, 4 et 5, le coffre 3 présente au moins une cavité 30 munie d'une ouverture 300 communiquant avec l'extérieur du bâtiment. En l'occurrence, le coffre 3 présente quatre cavités 30 séparées les unes des autres par des cloisons 301. Ces cavités sont réparties côte à côte dans le coffre, dans le sens de la largeur du coffre 3. Les cloisons 301 présentent des trous d'aération 3010 permettant de ventiler les cavités 30.

Ces cavités 30 ont pour vocation à servir de nichoir pour des oiseaux, tels que des martinets, qui ont pour habitude de nidifier dans des anfractuosités et notamment dans les recoins des fenêtres voir à l'intérieur des caissons des volets roulants.

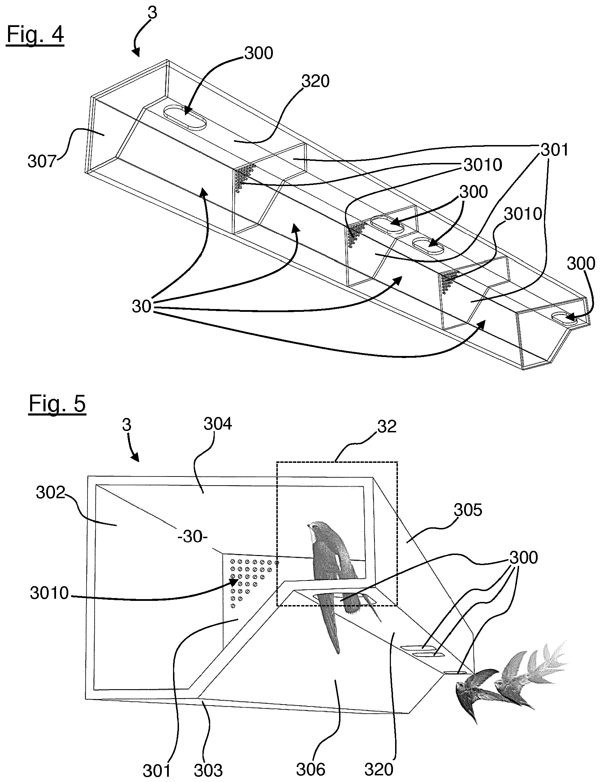

En référence aux figures 4 et 5, les ouvertures 300 de chacune des cavités 30 sont décalées d'un côté ou de l'autre des cavités 30. Les ouvertures 300 présentent une forme ovale.

Cette disposition augmente le volume utile pouvant être utilisé par les oiseaux pour réaliser leurs nids.

Selon le principe de l'invention, et en référence aux figures 2, 3b, 4 et 5, le coffre 3 présente un corniche 32.

Une corniche désigne couramment un élément continu en saillie d'une construction. En l'occurrence la corniche fait saillie par rapport au reste du coffre.

Cette corniche inclut une paroi inférieure 320 dans laquelle les ouvertures 300 des cavités 30 sont ménagées. Aussi, toujours selon le présent mode de réalisation et en référence aux figures 4 et 5, les ouvertures 300 sont décalées sur la paroi inférieure 320 de manière à être positionnée d'un côté ou de l'autre des cavités 30.

En référence aux figures 2, 3a, 3b, 4 et 5, le coffre 3 est plus précisément formé par :
- un fond 303 ;
- une paroi arrière 302 s'étendant à partir du fond 303 ;
- une paroi inclinée 306 s'étendant à partir du fond 303 ;
- la paroi inférieure 320 qui est aboutée à la paroi inclinée 306 ;
- une paroi avant 305 qui est aboutée à la paroi inférieure 320 ;
- deux parois latérales 307 s'étendant à partir du fond 303 et qui sont aboutées à la paroi arrière 302, à la paroi inclinée 306, à la paroi inférieure 320 ainsi qu'à la paroi avant 305 ;
- une paroi supérieure 304 qui referme le coffre 3 en étant couplées à la paroi arrière 302, aux deux parois latérales 307 ainsi qu'à la paroi avant 305.

Tel qu'illustré par les figures 2, 3b et 5, la corniche 32 est formée grâce à un décrochement réalisé dans la profondeur du coffre 3 par la paroi inclinée 306 et la paroi inférieure 320.

La paroi inclinée 306 forme une pente depuis la hauteur de la paroi inférieure 320 jusqu'au fond 303 du coffre 3.

Les moyens de fixation 4 du coffre 3 au bâtiment sont conçus pour ménager un écartement entre le coffre 3 et le bâtiment. Ces moyens de fixation 4 sont conçus dans un matériau thermiquement non conducteur.

En effet, selon le principe de l'invention, l'ensemble comprend une première couche 21 d'isolant thermique entre le coffre et le bâtiment.

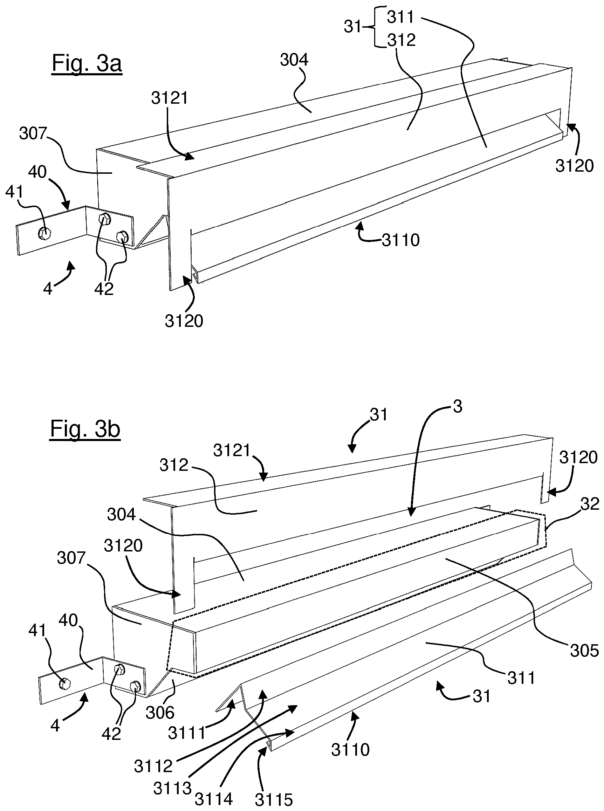

En référence aux figures 3a et 3b, les moyens de fixation 4 sont formés par des pattes de fixation 40 à rupture de pont-thermique, dont :
- une première partie est couplée à la face extérieure du mur du bâtiment par l'intermédiaire d'une vis 41 ;
- une seconde partie est couplée à l'une des paroi latérale 307 du coffre 3 par l'intermédiaire de deux vis 42.

L'ensemble selon l'invention comprend également une deuxième couche 22 d'isolant thermique entre le coffre 3 et le pré-cadre 1.

De cette manière le coffre 3 est intégré au bâtiment en surplombant le pré-cadre 1 tout en respectant les objectifs d'isolation thermique recherchés par la réalisation de l'isolation thermique 2 par l'extérieur de la façade du bâtiment.

Cette deuxième couche 22 d'isolant thermique est dimensionnée de manière à minimiser les espaces vides entre le coffre 3 et le pré-cadre 1.

En référence à la figure 2, le coffre 3 présente un profondeur Pc, la première couche 21 d'isolant présente une épaisseur E1, et l'isolation thermique 2 par l'extérieur de la façade du bâtiment est d'une épaisseur total Eit, telles que (Pc + E1) est sensiblement égal à Eit.

Tel qu'illustré par les figures 1 à 3b, l'ensemble comprend également un habillage extérieur 31 du coffre 3.

En référence à la figure 2, cet habillage extérieur 31 présente une extrémité basse 310 qui s'étend jusqu'au pré-cadre 1. L'extrémité basse 310 de l'habillage extérieur 31 s'étend notamment en recouvrement de la deuxième couche 22 d'isolant thermique.

Selon les figures 1, 2, 3a et 3b, l'habillage extérieur 31 comprend un élément supérieur 312 et un élément inférieur 311.

En référence aux figures 2, 3a et 3 b, l'élément supérieur 312 comprend :
- une partie horizontale 3121 ;
- une partie verticale avec deux retours en alignement 3120 destinés à venir dans l'alignement des deux montants latéraux 11 du pré-cadre 1.

La partie horizontale 3121 est conçue pour venir en appui sur la paroi supérieure 304 du coffre 3, et la partie verticale est plaquée contre la paroi avant 305 du coffre 3.

Tel qu'illustré par la figure 2, la paroi supérieure 304 du coffre 3 et la partie horizontale 3121 présente une légère pente orientée vers l'extérieur du bâtiment.

En référence aux figures 1 et 3a, les deux retours en alignement 3120 encadrent latéralement l'élément inférieur 311.

Selon la figure 2, l'élément inférieur 311 s'étend en dessous de la corniche 32.

Cet élément inférieur 311 délimite avec la paroi inférieure 320 de la corniche un espace de passage 5 des oiseaux jusqu'aux ouvertures 300.

Cet élément inférieur 311 forme également une pente au moins en dessous des ouvertures 300, qui est orientée vers l'extérieur du bâtiment.

L'élément inférieur 311 présente également à son extrémité basse un rebord en saillie 3110 par rapport à la façade du bâtiment.

Ce rebord en saillie 3110 forme une goutte d'eau et est destiné à éviter les ruissèlements sur la fenêtre 10 depuis l'élément inférieur 311.

Plus précisément, selon le présent mode de réalisation illustré par les figures 2, 3a et 3b, l'élément inférieur 311 est formé grâce à une plaque pliée à plusieurs reprises de manière à présenter plusieurs pans inclinés les uns par rapport aux autres.

Un premier pan 3111 est destiné à être positionné contre la paroi inclinée 306 du coffre 3 quand l'élément inférieur 311 de l'habillage extérieur 31 est assemblé sur le coffre 3. Ce premier pan 3111 est notamment couplé sur la paroi inclinée 306.

Un deuxième pan 3112, qui s'étend à partir d'une extrémité du premier pan 3111, ainsi qu'un troisième pan 3113, qui s'étend à partir d'une extrémité du deuxième pan 3112, forment la pente qui s'étend en dessous des ouvertures 300, et plus généralement en dessous de la corniche 320.

Le deuxième pan 3112 est destiné à présenter une inclinaison par rapport à l'horizontale qui est plus importante que celle du troisième pan 3113.

Enfin, un quatrième pan 3114 et un cinquième pan 3115 sont conçus pour former le rebord en saillie 3110 par rapport à la façade du bâtiment.

Tel qu'illustré par la figure 2, la partie haute 12 du pré-cadre 1 présente un bandeau 120 orienté vers l'extérieur du bâtiment et incliné vers le bas.

Ce bandeau 120 est positionné de manière complémentaire à l'élément inférieur 311 de l'habillage extérieur 31 du coffre 3, et est notamment positionné pour être situé directement en dessous du rebord en saillie 3110.

Le bandeau 120 est conçu former lui aussi une goutte d'eau destinée à éviter des ruissèlements sur la fenêtre 1.

A titre indicatif, l'habillage extérieur 31 du coffre 3 est avantageusement réalisé à partir d'une tôle aluminium.

En référence à la figure 1, le pré-cadre 1 présente une largeur totale L1 qui est sensiblement égale à une largeur totale L2 présentée par l'habillage extérieur 31 du coffre 3.

De cette manière, le coffre 3 s'intègre visuellement au pré-cadre 1.

Avantageusement, les moyens de fixation 4 sont conçus pour permettre la désolidarisation du coffre 3 de la façade par l'intermédiaire d'une intervention depuis l'intérieur du coffre 3. De cette manière, l'isolation thermique 2 par l'extérieur de la façade du bâtiment n'est pas dégradée. Ainsi, le démontage du nichoir ne nécessite pas d'intervention de reprise de la peinture de la façade.

A cet effet, les vis 42 sont accessibles depuis l'intérieur du coffre 3.

Pour permettre l'accès à l'intérieur du coffre 3, alors :
- l'habillage extérieur 31 du coffre 3 est couplé au coffre 3 de manière démontable ;
- la paroi inclinée 306 du coffre 3 est également démontable en façade.

Bien entendu, le coffre 3 peut être aménagé de manière à améliorer le confort des oiseaux qui nidifieraient dans les cavités 30.

Par exemple, il peut être installé des moyens d'évacuation de liquides depuis les cavités 30 jusqu'à l'extérieur du bâtiment.

## Revendications

1. Ensemble pour l'installation et/ou la rénovation d'une fenêtre, complémentaire d'une isolation thermique (2) par l'extérieur de la façade d'un bâtiment, l'ensemble comprenant :
- un pré-cadre (1) destiné à porter une fenêtre (10) ;
- un coffre (3) présentant au moins une cavité (30) munie d'au moins une ouverture (300) destinée à communiquer avec l'extérieur du bâtiment ;
- des moyens de fixation (4) du coffre au bâtiment, conçu pour ménager un écartement entre le coffre et le bâtiment ;
- une première couche (21) d'isolant thermique entre le coffre et le bâtiment ;
**caractérisé en ce que** le coffre (3) surplombe le pré-cadre (1), l'ensemble comprenant également une deuxième couche (22) d'isolant thermique entre le coffre (3) et le pré-cadre (1),
et **en ce que** le coffre (3) présente une corniche (32) incluant une paroi inférieure (320) dans laquelle la ou les ouvertures (300) sont ménagées, la corniche (32) faisant saillie par rapport au reste du coffre (3), la cavité (30) formant un nichoir à oiseaux.

2. Ensemble selon la revendication précédente, **caractérisé en ce que** :
- le coffre (3) présente une profondeur Pc ;
- la première couche (21) d'isolant thermique présente une épaisseur E1 ;
- l'isolation thermique (2) par l'extérieur de la façade du bâtiment est d'une épaisseur total Eit,
et **en ce que** (Pc + E1) est sensiblement égal à Eit.

3. Ensemble selon l'une quelconque des revendications précédentes, **caractérisé en ce qu'**il comprend un habillage extérieur (31) du coffre (3), l'habillage extérieur présentant une extrémité basse (310) s'étendant jusqu'au pré-cadre (1), en recouvrement de la deuxième couche (22) d'isolant thermique.

4. Ensemble selon la revendication précédente, **caractérisé en ce que** le pré-cadre (1) présente une largeur totale L1 sensiblement égale à une largeur totale L2 de l'habillage extérieur (31) du coffre (3).

5. Ensemble selon l'une quelconque des revendications 3 et 4, **caractérisé en ce que** l'habillage extérieur (31) comprend au moins un élément inférieur (311) s'étendant en dessous de la corniche (32), les ou les éléments inférieurs délimitant avec la paroi inférieure (320) de la corniche au moins un espace de passage (5) des oiseaux jusqu'à la ou les ouvertures (300).

6. Ensemble selon la revendication précédente, **caractérisé en ce que** l'élément inférieur (311) forme une pente au moins en dessous des ouvertures (300), la ou les pentes étant orientées vers l'extérieur du bâtiment.

7. Ensemble selon la revendication précédente, **caractérisé en ce que** l'élément inférieur (311) présente à son extrémité basse un rebord en saillie (3110) par rapport à la façade du bâtiment, le rebord en saillie étant destiné à éviter tout ruissellement sur la fenêtre (10) depuis l'élément inférieur.

8. Ensemble selon l'une quelconque des revendications précédentes, **caractérisé en ce qu'**il comprend au moins deux cavités (30) réparties côte à côte dans le coffre (3), les cavités étant séparées les unes des autres par des cloisons (301) présentant des trous d'aération (3010).

9. Ensemble selon l'une quelconque des revendications, **caractérisé en ce que** l'ouverture (300) de chaque cavité (30) est décalée d'un côté ou de l'autre de ladite cavité.

## Patentansprüche

1. Einheit für die Installation und/oder die Renovierung eines Fensters, zusätzlich zu einer Wärmedämmung (2) von der Außenseite der Fassade eines Gebäudes, wobei die Einheit umfasst:
- einen Vorrahmen (1), der dazu bestimmt ist, ein Fenster (10) zu tragen;
- einen Kasten (3), der mindestens einen Hohlraum (30) aufweist, der mit mindestens einer Öffnung (300) versehen ist, die dazu bestimmt ist, mit der Außenseite des Gebäudes verbunden zu werden;
- Befestigungsmittel (4) für den Kasten an dem Gebäude, derart gestaltet, um einen Abstand zwischen dem Kasten und dem Gebäude vorzusehen;
- eine erste Schicht (21) einer Wärmedämmung zwischen dem Kasten und dem Gebäude;
**dadurch gekennzeichnet, dass** der Kasten (3) den Vorrahmen (1) überragt, wobei die Einheit auch eine zweite Schicht (22) einer Wärmedämmung zwischen dem Kasten (3) und dem Vorrahmen (1) umfasst,
und dadurch, dass der Kasten (3) ein Gesims (32) aufweist, das eine untere Wand (320) beinhaltet, in der die Öffnung(en) (300) vorgesehen sind, wobei das Gesims (32) in Bezug auf den Rest des Kastens (3) hervorsteht, wobei der Hohlraum (30) einen Nistplatz für Vögel bildet.

2. Einheit nach dem vorstehenden Anspruch, **dadurch gekennzeichnet, dass**:
- der Kasten (3) eine Tiefe Pc aufweist;
- die erste Schicht (21) einer Wärmedämmung eine Dicke E1 aufweist;
- die Wärmedämmung (2) von der Außenseite der Fassade des Gebäudes von einer Gesamtdicke Eit ist,
und dadurch, dass (Pc + E1) im Wesentlichen gleich Eit ist.

3. Einheit nach einem der vorstehenden Ansprüche, **dadurch gekennzeichnet, dass** sie eine Außenverkleidung (31) des Kastens (3) umfasst, wobei die Außenverkleidung ein unteres Ende (310) aufweist, das sich bis zum Vorrahmen (1) in Überdeckung mit der zweiten Schicht (22) einer Wärmedämmung erstreckt.

4. Einheit nach dem vorstehenden Anspruch, **dadurch gekennzeichnet, dass** der Vorrahmen (1) eine Gesamtbreite L1 im Wesentlichen gleich einer Gesamtbreite L2 der Außenverkleidung (31) des Kastens (3) aufweist.

5. Einheit nach einem der Ansprüche 3 und 4, **dadurch gekennzeichnet, dass** die Außenverkleidung (31) mindestens ein unteres Element (311), das sich unterhalb des Gesimses (32) erstreckt, umfasst, wobei das oder die unteren Elemente mit der unteren Wand (320) des Gesimses mindestens einen Durchgangsraum (5) für die Vögel bis zu der oder den Öffnungen (300) begrenzen.

6. Einheit nach dem vorstehenden Anspruch, **dadurch gekennzeichnet, dass** das untere Element (311) ein Gefälle mindestens unterhalb der Öffnungen (300) bildet, wobei das oder die Gefälle zur Außenseite des Gebäudes hin ausgerichtet sind.

7. Einheit nach dem vorstehenden Anspruch, **dadurch gekennzeichnet, dass** das untere Element (311) an seinem unteren Ende einen hervorstehenden Rand (3110) in Bezug auf die Fassade des Gebäudes aufweist, wobei der hervorstehende Rand dazu bestimmt ist, jedweden Abfluss auf das Fenster (10) von dem unteren Element zu vermeiden.

8. Einheit nach einem der vorstehenden Ansprüche, **dadurch gekennzeichnet, dass** sie mindestens zwei Hohlräume (30) umfasst, die Seite an Seite in dem Kasten (3) verteilt sind, wobei die Hohlräume durch Trennwände (301) voneinander getrennt sind, die Lüftungslöcher (3010) aufweisen.

9. Einheit nach einem der Ansprüche, **dadurch gekennzeichnet, dass** die Öffnung (300) eines jeden Hohlraums (30) auf einer Seite oder der anderen des Hohlraums versetzt ist.

## Claims

1. An assembly for the installation and/or renovation of a window, complementary to thermal insulation (2) from the outside of the facade of a building, the assembly comprising:
- a pre-frame (1) intended to support a window (10);
- a box (3) having at least one cavity (30) provided with at least one opening (300) intended to communicate with the outside of the building;
- means (4) for fastening the box to the building, designed to form a clearance between the box and the building;
- a first layer (21) of thermal insulator between the box and the building;
**characterised in that** the box (3) overhangs the pre-frame (1), the assembly also comprising a second layer (22) of thermal insulator between the box (3) and the pre-frame (1),
and **in that** the box (3) has a cornice (32) including a lower wall (320) in which the opening(s) (300) is/are formed, the cornice (32) projecting with respect to the rest of the box (3), the cavity (30) forming a bird nesting box.

2. The assembly according to the preceding claim, **characterised in that**:
- the box (3) has a depth Pc;
- the first layer (21) of thermal insulator has a thickness E1;
- the thermal insulation (2) from the outside of the building facade has a total thickness Eit,
and **in that** (Pc + E1) is substantially equal to Eit.

3. The assembly according to any one of the preceding claims, **characterised in that** it comprises an external lining (31) of the box (3), the external lining having a bottom end (310) extending to the pre-frame (1), over the second layer (22) of thermal insulator.

4. The assembly according to the preceding claim, **characterised in that** the pre-frame (1) has a total width L1 substantially equal to a total width L2 of the external lining (31) of the box (3).

5. The assembly according to any one of claims 3 and 4, **characterised in that** the external lining (31) comprises at least one lower element (311) extending below the cornice (32), the lower element(s) delimiting with the lower wall (320) of the cornice at least one space for the passage (5) of birds up to the opening(s) (300).

6. The assembly according to the preceding claim, **characterised in that** the lower element (311) forms a slope at least below the openings (300), the slope(s) being directed outwardly of the building.

7. The assembly according to the preceding claim, **characterised in that** the lower element (311) has at its bottom end a flange (3110) projecting with respect to the facade of the building, the projecting flange being intended to avoid any runoff on the window (10) from the lower element.

8. The assembly according to any one of the preceding claims, **characterised in that** it comprises at least two cavities (30) distributed side-by-side in the box (3), the cavities being separated from each other by partitions (301) having vent holes (3010).

9. The assembly according to any one of the claims, **characterised in that** the opening (300) of each cavity (30) is offset on either side of said cavity.
